# EUROPÄISCHE PATENTANMELDUNG

(11) **EP 2 762 535 A1**
(43) Veröffentlichungstag der Anmeldung: **06.08.2014**
(21) Anmeldenummer: 13153918.1
(22) Anmeldetag: 04.02.2013
(51) Int. Cl.: C09D 5/00, C09D 183/08, C08G 77/26, C08G 77/28, C03C 17/30

(54) **Vorbehandlung mit verbesserter Lagerstabilität und Haftung**

(71) Anmelder: Sika Technology AG, 6340 Baar (CH)
(72) Erfinder: Dohner, Reto, 8005 Zürich (CH); Studiger, Britta, 8404 Winterthur (CH); Huck, Wolf Rüdiger, 8044 Gockhausen (CH)
(74) Vertreter: Sika Patent Attorneys

(57) **Zusammenfassung**

Die Erfindung betrifft eine Zusammensetzung, umfassend A) mindestens ein Aminosilan, das mindestens eine an Si gebundene hydrolysierbare Gruppe aufweist, B) mindestens ein Mercaptosilan, das mindestens eine an Si gebundene hydrolysierbare Gruppe aufweist, und C) mindestens einen Emulgator ausgewählt aus Pyrrolidonen, Propionamiden und Aminoalkohol-Reaktionsprodukten, wobei, wenn mindestens ein Aminoalkohol-Reaktionsprodukt als Emulgator eingesetzt wird, ein Aminoalkohol und zumindest ein Teil des Aminosilans und/oder Mercaptosilans in Form eines Aminoalkohol-Reaktionsprodukts enthalten sind, bei dem zumindest ein Teil der hydrolysierbaren Gruppen, die in dem mindestens einen Aminosilan und dem mindestens einen Mercaptosilan vorhanden sind, durch die Aminoalkoholat-Gruppe des Aminoalkohols ersetzt ist, D) und/oder Hydrolyse- und/oder Kondensationsprodukte der enthaltenen Silane.

## Beschreibung

### Technisches Gebiet

Die Erfindung betrifft eine Zusammensetzung, insbesondere eine wässrige ein- oder zweikomponentige Zusammensetzung, die als Haftvermittlerzusammensetzung geeignet ist, ein Verfahren zur Herstellung der Zusammensetzung und deren Verwendung.

### Stand der Technik

Kleben ist eine breit eingesetzte Verbindungstechnologie. Einige Substrate können aber hierbei problematisch sein, da sie mit gewissen Klebstoffen keine oder ungenügende Haftung aufbauen können. Haftvermittlerzusammensetzungen werden seit langem verwendet, um die Haftung zu verbessern. Ein besonders wichtiges Einsatzgebiet von Haftvermittlerzusammensetzungen ist der Fahrzeugbau, insbesondere beim "Direct glazing", d.h. das Verkleben von Scheiben mit Fahrzeugkarosserien.

Typischerweise basieren derartige Zusammensetzungen auf Organosilanen. Insbesondere werden derartige Haftvermittlerzusammensetzungen als Primer, d.h. als Haftverbesserungsvoranstrich, verwendet. Derartige Zusammensetzungen oder Primer enthalten häufig inerte leicht flüchtige Lösungsmittel, um ein schnelles Ablüften zu gewährleisten. Der Gehalt an organischem Lösungsmittel ist aber hinsichtlich der Umweltverträglichkeit und Arbeitssicherheit nachteilig.

Wässrige Haftvermittlerzusammensetzungen auf Basis von Organosilanen sind bekannt. Sie weisen jedoch einige Nachteile auf. Ein Problem bei wässrigen Haftvermittlerzusammensetzungen auf Silanbasis ist entweder deren relativ geringe Lagerstabilität bei genügender Reaktivität oder deren ungenügende Reaktivität bei genügender Stabilität. Die eingesetzten Silane weisen hydrolysierbare Gruppen auf, die bei Mischung mit Wasser unter Bildung von Silanolgruppen (Si-OH) hydrolysieren. Solche Silanolgruppen sind häufig reaktiv und kondensieren spontan miteinander und Bildung höhermolekularer Kondensationsprodukte.

Weiterhin ist der Einsatz von Aminosilanen und/oder Mercaptosilanen in solchen wässrigen Haftvermittlerzusammensetzungen bekannt. Das Emulgieren von Merkaptosilanen oder Aminosilan-Mercaptosilan-Gemischen in Wasser ist besonders schwierig, da die Mercaptosilane nicht wasserlöslich sind, bevor die Silane hydrolysiert werden. Um diese Silane in Wasser zu bringen, muss vor der Hydrolyse eine vollständige, homogene Verteilung sichergestellt werden. Zusätzlich muss das Wasser mit Säuren, z.B. Essigsäure, so justiert werden, dass die als Folgereaktion auftretende Kondensation möglichst verlangsamt wird. Es war bislang nicht möglich, die Mischbarkeit so zu verbessern bzw. die Hydrolyse so zu verlangsamen, dass ein "normaler", d.h. einige Minuten dauernder Mischprozess angewandt werden konnte. Daher müssen die Silane und das Wasser schnell homogen vermischt werden, was spezielle Mischvorrichtungen erfordert.

Dies führt dazu, dass wässrige Haftvermittlerzusammensetzungen bisher als 2-Komponentensysteme (z.B. Sika HydroPrep^{®}-100 von Sika Schweiz AG) vertrieben werden und vor dem Gebrauch vor Ort ein Mischprozess für die Mischung der beiden Komponenten erforderlich ist. Es ist wichtig, dass die beiden Komponenten unter sehr starken Turbulenzen sehr schnell homogen gemischt werden. Hierfür ist ein speziell dafür entwickeltes Gerät ("Shaker") erforderlich. Nach der Zubereitung hat das fertig gemischte Produkt eine Lagerstabilität ("Pot-Life") von nicht mehr als 30 Tagen.

### Darstellung der Erfindung

Die Aufgabe der vorliegenden Erfindung ist es daher, wässrige Haftvermittlerzusammensetzungen auf Silanbasis bereitzustellen, die eine verbesserte Lagerstabilität aufweisen, so dass die wässrigen Zusammensetzungen auch als einkomponentige wässrige Haftvermittlersysteme vertrieben werden können. Ferner sollte auch eine einfachere Mischung ohne spezielle Mischvorrichtungen möglich sein.

Überraschenderweise wurde nun gefunden, dass durch Einsatz spezieller Emulgatoren eine deutliche Verbesserung der Lagerstabilität der wässrigen Zusammensetzungen erreicht werden kann. Bei den Emulgatoren handelt es sich um spezielle cyclische oder lineare Carbonsäureamide oder Aminoalkohol-Reaktionsprodukte, bei denen ein Aminoalkohol in Form eines Reaktionsprodukts von Aminoalkohol und den Silanen als "integrierter" Emulgator eingesetzt wird.

Dementsprechend betrifft die Erfindung eine Zusammensetzung, umfassend
A) mindestens ein Aminosilan, das mindestens eine an Si gebundene hydrolysierbare Gruppe aufweist,
B) mindestens ein Mercaptosilan, das mindestens eine an Si gebundene hydrolysierbare Gruppe aufweist, und
C) mindestens einen Emulgator ausgewählt aus Pyrrolidonen, Propionamiden und Aminoalkohol-Reaktionsprodukten,
   wobei, wenn mindestens ein Aminoalkohol-Reaktionsprodukt als Emulgator eingesetzt wird, ein Aminoalkohol und zumindest ein Teil des Aminosilans und/oder Mercaptosilans in Form eines Aminoalkohol-Reaktionsprodukts enthalten sind, bei dem zumindest ein Teil der hydrolysierbaren Gruppen, die in dem mindestens einen Aminosilan und dem mindestens einen Mercaptosilan vorhanden sind, durch die Aminoalkoholat-Gruppe des Aminoalkohols ersetzt ist,
D) und/oder Hydrolyse- oder Kondensationsprodukte der enthaltenen Silane. Die Zusammensetzung wird besonders bevorzugt als ein- oder zweikompentige wässrige Zusammensetzung eingesetzt, z.B. als Haftvermittler, wobei die einkomponentige wässrige Zusammensetzung besonders bevorzugt ist.

Es hat sich überraschenderweise gezeigt, dass sich mit den erfindungsgemäßen Zusammensetzungen äußerst lagerstabile wässrige Zusammensetzungen formulieren lassen. Die gebildeten wässrigen Zusammensetzungen bzw. Haftvermittlerzusammensetzungen können eine Haltbarkeit von 12 Monaten aufweisen. Zusätzlich zeigt sich erstaunlicherweise eine verbesserte Mischbarkeit der reaktiven Komponenten in Wasser, was den Mischprozess deutlich vereinfacht und eine problemlose Herstellung in einem Standardreaktor möglich macht. Die Erfindung ermöglicht somit eine einfachere Handhabung, da das Produkt als 1-Komponentensytem und nicht mehr als kompliziertes 2-Komponentensystem angeboten werden kann. Die Erfindung befriedigt das Bedürfnis, ein wässriges 1-Komponentensystem anbieten zu können.

Außerdem werden das Verhalten der wässrigen Zusammensetzung bezüglich Hafteigenschaften und Hitzestabilität der ausgehärteten Verklebung verbessert. Die wässrige Zusammensetzung eignet sich ganz allgemein als reaktive, nicht sichtbare Haft-Vorbehandlung für Substrate, insbesondere Glas und Glaskeramiken, bzw. für das "Direct glazing" im Automobilbau als Vorbehandlung für die Verklebung, insbesondere mit Polyurethan-Klebstoffen, vorzugsweise 1 K Polyurethan-Klebstoffen.

### Weg zur Ausführung der Erfindung

Im vorliegenden Dokument bezeichnen die Terme "Silan" bzw. "Organosilan" Verbindungen, welche einerseits mindestens eine, üblicherweise zwei oder drei, hydrolysierbare Gruppen aufweisen, vorzugsweise über Si-O-Bindungen, direkt an das Siliciumatom gebundene Alkoxygruppen oder Acyloxygruppen, und andererseits mindestens einen, über eine Si-C-Bindung, direkt an das Siliciumatom gebundenen organischen Rest aufweisen. Derartige Silane mit Alkoxy- oder Acyloxygruppen sind dem Fachmann auch als Organoalkoxysilane bzw. Organoacyloxysilane bekannt.

Die Silane haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).

Als "Aminosilane" bzw. "Mercaptosilane" werden Organosilane bezeichnet, deren organischer Rest eine Aminogruppe bzw. eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Eine an Si gebundene hydrolysierbare Gruppe ist eine Gruppe, die durch Hydrolyse, gegebenenfalls unter Anwesenheit eines Katalysators zu einer Silanolgruppe hydrolysiert werden kann. Hydrolyseprodukte sind Silane, deren hydrolysierbaren Gruppen zumindest teilweise hydrolysiert sind, d.h. zumindest ein Teil der hydrolysierbaren Gruppen ist durch eine OH-Gruppe ersetzt. Kondensationsprodukte beinhalten Kondensate aus zwei oder mehr solcher hydrolysierten Silane. Diese Hydrolyse- und Kondensationsprodukte von Silanen sind dem Fachmann bekannt.

Der Ausdruck "unabhängig voneinander" bedeutet hier immer auch unabhängig voneinander in demselben Molekül, wenn verschiedene Möglichkeiten bestehen.

Für die Zusammensetzung können ein oder mehrere Aminosilane und ein oder mehrere Mercaptosilane eingesetzt werden. Die Aminosilane und Mercaptosilane weisen jeweils mindestens eine an Si gebundene hydrolysierbare Gruppe auf. Es kann sich um jede übliche hydrolysierbare Gruppen handeln, wobei Alkoxygruppen und Acyloxygruppen bevorzugt sind, und C₁-C₄-Alkoxygruppen besonders bevorzugt sind. Nach der Mischung mit Wasser kann mit der Zeit eine Hydrolyse der hydrolysierbaren Gruppen erfolgen. Es ergeben sich dann Hydrolyseprodukte, bei denen zumindest ein Teil der hydrolysierbaren Gruppen durch OH Gruppen ersetzt werden. Als Folgereaktion können sich Kondensationsprodukte über die gebildeten Silanolgruppen in den Hydrolyseprodukten bilden.

Das Aminosilan, das mindestens eine an Si gebundene hydrolysierbare Gruppe aufweist, ist bevorzugt ein Aminosilan der nachstehenden Formel (I). Das Mercaptosilan, das mindestens eine an Si gebundene hydrolysierbare Gruppe aufweist, ist bevorzugt ein Mercaptosilan der nachstehenden Formel (II). 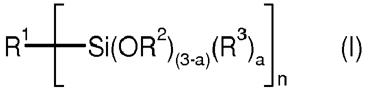 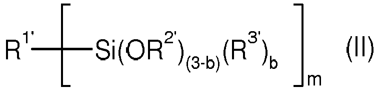 worin in den Formeln (I) und (II)
R¹ für einen n-wertigen organischen Rest mit mindestens einer primären und/oder sekundären Aminogruppe steht,
R^{1'} für einen m-wertigen organischen Rest mit mindestens einer Mercaptogruppe steht,
R² und R^{2'} unabhängig voneinander für eine Alkylgruppe mit 1 bis 4 C-Atomen oder für eine Acylgruppe wie Acetyl stehen, wobei eine Alkylgruppe mit 1 bis 4 C-Atomen oder eine Acylgruppe wie Acetyl bevorzugt und Methyl und Ethyl besonders bevorzugt sind;
R³ und R^{3'} unabhängig voneinander für H oder für eine Alkylgruppe mit 1 bis 10 C-Atomen stehen;
a und b unabhängig voneinander für einen Wert von 0, 1 oder 2 stehen, wobei a und b unabhängig voneinander bevorzugt 0 oder 1 und besonders bevorzugt 0 sind;
und n und m unabhängig voneinander für die Werte 1, 2, 3 und 4 stehen,

Die Gruppen (OR²) und (OR²) in den Formeln (I) bzw. (II) stellen die hydrolysierbare Gruppe dar. In Hydrolyseprodukten dieser Silane werden diese Gruppen (OR²) und (OR²) zumindest teilweise durch OH-Gruppen ersetzt.

Bevorzugt sind aminofunktionelle Organoalkoxysilane, d.h. Aminosilane der Formel (I), bei denen R² für eine Alkylgruppe mit 1 bis 4 C-Atome steht, wobei aminofunktionelle Organomethoxysilane (R² = Methyl) und aminofunktionelle Organoethoxysilane (R² = Ethyl) besonders bevorzugt sind. Als besonders vorteilhaft haben sich Aminosilane mit drei Alkoxygruppen (a = 0), insbesondere mit drei Methoxygruppen, erwiesen.

Als Aminosilane sind insbesondere Aminosilane geeignet, welche ausgewählt sind aus der Gruppe bestehend aus 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, N-Methyl-3-aminopropyl-trimethoxysilan, N-Ethyl-3-aminopropyl-trimethoxysilan, N-Butyl-3-aminopropyl-trimethoxysilan, N-Cyclohexyl-3-aminopropyl-trimethoxysilan, N-Phenyl-3-aminopropyl-trimethoxysilan, N-Methyl-3-amino-2-methylpropyl-trimethoxysilan, N-Ethyl-3-amino-2-methylpropyl-trimethoxysilan, N-Ethyl-3-aminopropyl-dimethoxy-methylsilan, N-Phenyl-4-aminobutyl-trimethoxysilan, N-Phenyl-aminomethyl-dimethoxymethylsilan, N-Cyclohexyl-aminomethyl-dimethoxymethylsilan, N-Methyl-aminomethyl-dimethoxymethylsilan, N-Ethylaminomethyl-dimethoxymethylsilan, N-Propyl-aminomethyl-dimethoxymethylsilan, N-Butyl-aminomethyl-dimethoxymethylsilan; N-(2-Aminoethyl)-3-aminopropyl-trimethoxysilan, 3-[2-(2-Aminoethylamino)-ethylamino]-propyl-trimethoxysilan, Bis(trimethoxysilylpropyl)amin, sowie deren Analoga mit drei Ethoxy- oder drei Isopropoxygruppen anstelle der drei Methoxygruppen am Silicium.

In einer Ausführungsform ist das Aminosilan der Formel (I) ein Aminosilan der Formel (V)

H₂N-R⁵Si(OR²)₍₃₋ₐ₎(R³)ₐ (V)

wobei R⁵ für eine lineare oder verzweigte Alkylengruppe mit 1 bis 6 C-Atomen, insbesondere für Propylen, steht und die anderen Substituenten und Indices wie in Formel (I) definiert sind. Als besonders bevorzugt gilt hierbei 3-Aminopropyltrimethoxysilan.

In einer bevorzugten Ausführungsform weist das Aminosilan der Formel (I) sekundäre Aminogruppen auf, wobei es sich hierbei insbesondere um 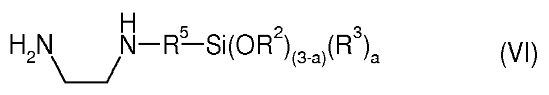 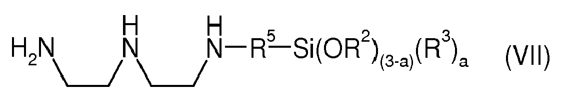 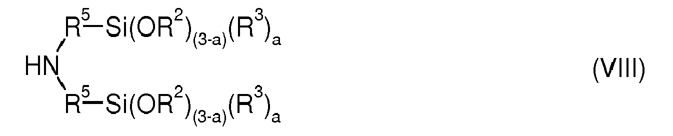 Aminosilane der Formel (VI) oder (VII) oder (VIII) handelt. wobei R⁵ für eine lineare oder verzweigte Alkylengruppe mit 1 bis 6 C-Atomen, insbesondere für Propylen, steht und die anderen Substituenten und Indices wie in Formel (I) definiert sind. Als besonders bevorzugt gezeigt haben sich N-(2-Aminoethyl)-3-aminopropyl-trimethoxysilan, 3-[2-(2-Aminoethylamino)-ethyl-amino]-propyl-trimethoxysilan und Bis(trimethoxysilylpropyl)amin.

Es hat sich als besonders vorteilhaft herausgestellt, wenn zwei oder mehr Aminosilane der Formel (I) in der Zusammensetzung, vorhanden sind, von denen vorzugsweise mindestens eines ein Aminosilan der Formel (VI) ist. Eine besonders bevorzugte Kombination ist ein Aminosilan der Formel (VI) und ein ein Aminosilan der Formel (VIII) in der Zusammensetzung.

Das Mercaptosilan, das mindestens eine an Si gebundene hydrolysierbare Gruppe aufweist, ist vorzugsweise mindestens ein vorstehend beschriebenes Mercaptosilan der Formel (II). Besonders bevorzugt sind mercaptofunktionelle Organoalkoxysilane, d.h. Mercaptosilane der Formel (II), bei denen R^{2'} für eine Alkylgruppe mit 1 bis 4 C-Atome steht. Besonders bevorzugt sind mercaptofunktionelle Organomethoxysilane (R^{2'} = Methyl) und mercaptofunktionelle Organoethoxysilane (R^{2'} = Ethyl). Als besonders vorteilhaft haben sich Mercaptosilane mit drei Alkoxygruppen (b = 0), insbesondere drei Methoxygruppen, erwiesen.

Bevorzugt weist das Mercaptosilan der Formel (II) die Formel (IX) auf.

HS-R^{5'}-Si(OR^{2'})_{(3-b)}(R^{3'})_{b} (IX)

wobei R^{5'} für eine lineare oder verzweigte Alkylengruppe mit 1 bis 6 C-Atomen, insbesondere für Propylen, steht, wobei die anderen Substituenten und Indices wie in Formel (II) definiert sind.

Besonders bevorzugte Mercaptosilane sind 3-Mercaptopropyl-trimethoxysilan und 3-Mercaptopropyltriethoxysilan.

Die Zusammensetzung umfasst ferner mindestens einen Emulgator ausgewählt aus Pyrrolidonen, Propionamiden und Aminoalkohol-Reaktionsprodukten. Pyrrolidone sind cyclische Carbonsäureamide, Propionamide sind lineare Carbonsäureamide. Aminoalkohole werden als integrierter Emulgator in Form eines Reaktionsproduktes mit mindestens einem Teil des Aminosilans und/oder Mercaptosilans in der Zusammensetzung eingesetzt. Bevorzugt ist der Einsatz von Pyrrolidonen oder Aminoalkohol-Reaktionsprodukten. Die Emulgatoren bewirken eine bessere Mischbarkeit mit Wasser und verlangsamte Kondensationsreaktionen nach Zugabe von Wasser.

Bei den einsetzbaren Pyrrolidonen handelt es sich insbesondere um 2-Pyrrolidone. 2-Pyrrolidone sind cyclische Carbonsäureamide. Das einsetzbare Pyrrolidon kann 2-Pyrrolidon, auch als γ-Butyrolactam bezeichnet, oder ein Derivat des 2-Pyrrolidons sein, das an mindestens einer der drei Methylenringgruppen und/oder am Stickstoffatom einen Substituenten aufweist. Geeignete Substituenten am Stickstoffatom sind Alkyl, z.B. C₁₋₁₂-Alkyl, bevorzugt C₁-C₇-Alkyl, besonders bevorzugt C₁-C₄-Alkyl, insbesondere Methyl oder Ethyl, oder Cycloalkyl, bevorzugt Cyclopentyl und Cyclohexyl, insbesondere Cyclohexyl. Geeignete Substituenten an der Methylengruppe sind z.B. Alkyl, bevorzugt C₁-C₄-Alkyl, insbesondere Methyl oder Ethyl.

Bevorzugt sind N-substituierte 2-Pyrrolidone. Gegebenenfalls können sie an mindestens einer Methylenringgruppe einen Substituenten aufweisen, was aber nicht bevorzugt ist. Beispiele sind N-C₁-C₁₂-Alkyl-2-pyrrolidon und Polyvinylpyrrolidon. Beispiele für Verbindungen mit längerkettigen Alkylgruppen sind 1-Octyl-2-pyrrolidon und 1-Dodecylpyrrolidon. Besonders bevorzugt sind N-C₁-C₇-Alkyl-2-pyrrolidon oder N-C₁-C₆-Alkyl-2-pyrrolidon, insbesondere N-C₁-C₄-Alkyl-2-pyrrolidon, und N-Cycloalkyl-2-pyrrolidon, wie N-Cyclohexyl-2-pyrrolidon. Am meisten bevorzugt sind N-Methyl-2-pyrrolidon (NMP), N-Ethyl-2-pyrrolidon (NEP) und insbesondere N-Cyclohexyl-2-pyrrolidon (CHP).

Als Propionamide eignen sich Propionamid selbst und Derivate des Propionamids. Beispiele für geeignete Propionamide sind Propionamide der Formel

R⁶-C(O)NR⁷₂

worin R⁶ eine substituierte oder unsubstituierte Ethylgruppe ist und R⁷ unabhängig voneinander H oder eine C₁₋₄-Alkylgruppe, insbesondere Methyl oder Ethyl, ist. Bevorzugt ist mindestens eine Gruppe R⁷ eine C₁₋₄-Alkylgruppe und besonders bevorzugt sind beide Gruppen R⁷ eine C₁₋₄-Alkylgruppe, wobei Methyl- und Ethylgruppe bevorzugt sind.

Die Gruppe R⁶ kann bevorzugt mindestens einen Substituenten und vorzugsweise genau einen Substituenten an der Ethylgruppe aufweisen. Der Substituent befindet sich bevorzugt am terminalen Ende der Ethylgruppe, d.h. am C3-Atom des Propionamids. Beispiele für geeignete Substituenten sind C₁-C₄-Alkoxygruppen, wie Methoxy, Ethoxy, Propoxy und Butoxy.

Konkrete Beispiele sind 3-Methoxy-N,N-dimethylpropionamid und 3-Butoxy-N,N-dimethylpropionamid.

Der Aminoalkohol, mit dem das Aminoalkohol-Reaktionsprodukt gebildet wird, ist eine Verbindung, die mindestens eine Aminogruppe und mindestens eine Hydroxygruppe aufweist. Der Aminoalkohol kann z.B. eine oder zwei Hydroxygruppen aufweisen, wobei eine Hydroxgruppe bevorzugt ist. Der Aminoalkohol kann z.B. eine oder zwei oder mehr Aminogruppen aufweisen, wobei es sich bei den Aminogruppen z.B. um primäre oder sekundäre Aminogruppen handeln kann.

Beispiele für Aminoalkohole, die als Emulgatorvorstufe zur Bildung des Aminoalkohol-Reaktionsprodukts geeignet sind, sind Ethanolamin, Diethylenglykolamin, N-(β-Aminoethyl)aminoethanol, Diethanolamin und N-Methyldiethanolamin, wobei Diethylenglykolamin am meisten bevorzugt ist. Diethylenglykolamin wird auch als 2-(2-Aminoethoxy)ethanol bezeichnet.

Wenn mindestens ein Aminoalkohol-Reaktionsprodukt als Emulgator eingesetzt wird, sind der Aminoalkohol und zumindest ein Teil des Aminosilans und/oder des Mercaptosilans in Form eines Reaktionsprodukts enthalten, bei dem zumindest ein Teil der hydrolysierbaren Gruppen, die in dem mindestens einen Aminosilan und dem mindestens einen Mercaptosilan vorhanden sind, durch die Aminoalkoholat-Gruppe des Aminoalkohols ersetzt ist.

Das Reaktionsprodukt wird durch eine Umesterung oder Veresterung mindestens eines Teils der an Si gebundenen hydrolysierbaren Gruppen der in der Zusammensetzung enthaltenen Silane mit dem Aminoalkohol erhalten.

Der Um- oder Veresterungsgrad kann in einem weiten Bereich gewählt werden. Es können auch alle der an Si gebundenen hydrolysierbaren Gruppen der in der Zusammensetzung enthaltenen Aminosilane und/oder Mercaptosilane durch die Aminoalkoholatgruppe ersetzt sein. Vorzugsweise wird der Um- oder Veresterungsgrad so gewählt, dass, bezogen auf die Gesamtmenge der in der Zusammensetzung enthaltenen Silane, das molare Verhältnis der an Si gebundenen hydrolysierbaren Gruppen und der an Si gebundenen Aminoalkoholat-Gruppen, die in den Silanen vorhanden sind, zu den an Si gebundenen Aminoalkoholat-Gruppen im Bereich von 1:1 bis 10:1, bevorzugt von 10:5 bis 10:2 liegt.

Wenn z.B. bei einem Silan mit drei hydrolysierbaren Gruppen (z.B. Methoxy), eine hydrolysierbare Gruppe durch eine Aminoalkoholat-Gruppe ersetzt wird, enthält das Reaktionsprodukt zwei hydrolysierbare Gruppen und eine Aminoalkoholat-Gruppe. Das molare Verhältnis der an Si gebundenen hydrolysierbaren Gruppen (2) und der an Si gebundenen Aminoalkoholat-Gruppen (1), zu den an Si gebundenen Aminoalkoholat-Gruppen (1) wäre dann 3:1. Zwar ist die Aminoalkoholat-Gruppe prinzipiell auch eine hydrolysierbare Gruppe, dies wird aber hier nicht berücksichtigt.

Es versteht sich, dass sich dieses molare Verhältnis auf die Zusammensetzung bezieht, bevor es zu Hydrolyse- und/oder Kondensationsreaktionen gekommen ist. Es versteht sich ferner, dass eine Zusammensetzung enthaltend das beschriebene Reaktionsprodukt ein Gemisch unterschiedlicher Verbindungen sein kann, z.B. nicht umgesetzte Aminosilane oder Mercaptosilane und Aminosilane und/oder Mercaptosilane, die ein, zwei oder drei Aminoalkoholatgruppen aufweisen. Die vorstehend angegebenen molaren Verhältnisse sind daher als Mittelwerte zu verstehen. Nach Zugabe von Wasser können sich dann zusätzlich Hydrolyse- und/oder Kondensationsprodukte bilden.

Aminosilane und/oder Mercaptosilane, die durch die Umesterung oder Veresterung Aminoalkoholat-Gruppen aufweisen werden hier weiterhin als Aminosilane bzw. Mercaptosilane aufgefasst. Das Verfahren zur Herstellung der Mischungen bzw. der Reaktionsprodukte wird weiter unten näher erläutert.

In einer bevorzugten Ausführungsform wird zu der das Aminoalkohol-Reaktionsprodukt enthaltenden Zusammensetzung zusätzlich ein weiterer Emulgator ausgewählt aus Pyrrolidonen und Propionamiden, bevorzugt Pyrrolidonen, insbesondere N-Cyclohexyl-2-pyrrolidon, zugesetzt. Auf diese Weise können Mischbarkeit der Zusammensetzung und Lagerstabilität der erhaltenen wässrigen Zusammensetzung weiter erhöht werden.

Gegebenenfalls kann die Zusammensetzung ferner mindestens ein Tetraalkoxysilan der Formel (IV) enthalten

Si(OR⁴)₄ (IV)

wobei R⁴ unabhängig voneinander eine Alkylgruppe mit 1 bis 4 C-Atomen oder für eine Acylgruppe, insbesondere Acetylgruppe, steht. Derartige Tetraalkoxysilane sind beispielsweise Tetramethoxysilan, Tetraethoxysilan, Tetraisopropoxysilan, Tetrapropoxysilan, Tetrabutoxysilan und Tetraacetoxysilan. Besonders bevorzugt ist Tetraethoxysilan. Wie bei den Aminosilanen und Mercaptosilanen können die Tetraalkoxysilane bei Anwesenheit von Wasser hydrolysieren und gegebenenfalls mit anderen Silanen kondensieren.

In einer bevorzugten Ausführungsform handelt es sich bei der Zusammensetzung um eine wässrige Zusammensetzung bzw. Haftvermittlerzusammensetzung, d.h. die Zusammensetzung umfasst ferner Wasser. Es kann sich um eine einkomponentige oder zweikomponentige wässrige Haftvermittlerzusammensetzung handeln, wobei es sich besonders bevorzugt um eine einkomponentige wässrige Haftvermittlerzusammensetzung handelt.

Bei der bevorzugten einkomponentigen wässrigen Haftvermittlerzusammensetzung sind die vorstehend beschriebenen Silane, Emulgatoren bzw. das Aminoalkohol-Reaktionsprodukt und Wasser in der einzigen Komponente enthalten. Die zweikomponentige wässrige Haftvermittlerzusammensetzung besteht aus einer Silankomponente A, die die vorstehend beschriebenen Silane, Emulgatoren bzw. das Aminoalkohol-Reaktionsprodukt enthält, und einer wässrigen Komponente B, die Wasser enthält. Die einkomponentige wässrige Haftvermittlerzusammensetzung zeichnet sich durch ausgezeichnete Lagerstabilität aus.

Wenn zu der die Silane enthaltenden Zusammensetzung Wasser zugegeben wird, können die Silane mit der Zeit, meist in wenigen Minuten, hydrolysiert und/oder kondensiert werden. Die Zusammensetzung kann dann neben den darin enthaltenen Silanen auch Hydrolyse- und/oder Kondensationprodukte dieser Silane oder bei fortgeschrittener Umsetzung gegebenenfalls nur noch Hydrolyse- und/oder Kondensationprodukte der enthaltenen Silane wie vorstehend beschrieben enthalten.

Die ein- oder zweikomponentige Zusammensetzung kann neben Wasser weitere optionale Bestandteile umfassen. Derartige zusätzliche Bestandteile sind z.B. Tenside, Säuren, Haftvermittleradditive, Katalysatoren, Cosolventien, Biozide, Antiabsetzmittel, Stabilisatoren, Inhibitoren, Pigmente, Farbstoffe, Korrosionsschutzmittel, Geruchsstoffe, UV-Indikatoren, Thixotropiermittel, Füllstoffe, Entschäumer, weitere Organosilane und Titanate.

Säuren sind bevorzugte zusätzliche Bestandteile der ein- oder zweikomponentigen wässrigen Zusammensetzung. Die Säure kann organisch oder anorganisch sein. Organische Säuren sind einerseits Carbonsäuren, insbesondere eine Carbonsäure, welche ausgewählt ist aus der Gruppe umfassend Ameisen-, Essig-, Propion-, Trifluoressig-, Oxal-, Malon-, Bernstein-, Malein-, Fumar- und Zitronensäure sowie Aminosäuren, insbesondere Asparginsäure und Glutaminsäure. Als Carbonsäure ist Essigsäure bevorzugt.

Organische Säuren sind anderseits insbesondere solche die einen Schwefelatom oder ein Phosphoratom enthalten. Derartige organische Säuren sind insbesondere organische Sulfonsäuren. Unter organischer Sulfonsäure werden Verbindungen verstanden, welche einen Kohlenstoff-Atome aufweisenden organischen Rest sowie mindestens eine funktionelle Gruppe -SO₃H aufweisen. Bevorzugt sind aromatische Sulfonsäuren.

Die aromatische Sulfonsäure kann ein- oder mehrkernig sein und es können eine oder mehrere Sulfonsäure-Gruppen vorhanden sein. Beispielswiese können dies 1- oder 2-Napthalinsulfonsäure, 1,5-Napthalindisulfonsäure, Benzolsulfonsäure oder Alkylbenzolsulfonsäuren sein. Bevorzugte aromatische Sulfonsäuren sind diejenigen, welche die Formel (X) aufweisen 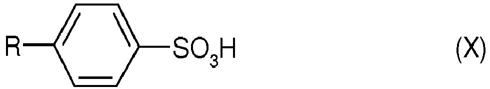 R steht hierbei für einen Alkylrest mit 1 bis 18 Atomen. Bevorzugt steht R für eine Methyl- oder Dodecyl-Gruppe, insbesondere für eine Dodecyl-Gruppe.

Die Säure kann weiterhin eine anorganische Säure sein. Als anorganische Säuren eignen sich z.B. jene, die ein Schwefelatom oder ein Phosphoratom aufweisen. Als Phosphoratome aufweisende Säuren gelten insbesondere Phosphorsäure, Phosporige Säure, Phosponsäure, Phosphonige Säure. Als Schwefelatome aufweisende Säuren gelten insbesondere Schwefelsäuren, insbesondere Schwefelsäure, schweflige Säuren, Perschwefelsäure, Dischwefelsäure (=Pyroschwefelsäure), Dischwefelige Säure, Dithionsäure, Dithionige Säure, Thioschwefelsäure oder Thioschweflige Säure.

Bevorzugt sind Säuren die einen pKₐ zwischen 4,0 und 5 aufweisen. Unter pKₐ versteht der Chemiker bekannterweise den negativen dekadischen Logarithmus der Säuredissoziationskonstante Kₐ: pKₐ = -log₁₀ka.

Ferner sind Tenside bevorzugte zusätzliche Bestandteile der ein- oder zweikomponentigen wässrigen Haftvermittlerzusammensetzung. Als Tenside können natürliche oder synthetische Stoffe verwendet werden, welche in Lösungen die Oberflächenspannung des Wassers oder anderer Flüssigkeiten herabsetzen. Als Tenside, auch Netzmittel genannt, können anionische, kationische, nichtionische oder ampholytische Tenside oder deren Mischungen verwendet werden.

Beispiele für anionische Tenside sind Carboxylat-, Sulfat-, Phosphat- oder Sulfonat-Gruppen aufweisende Tenside, wie zum Beispiel Aminosäurederivate, Fettalkoholethersulfate, Fettalkoholsulfate, Seifen, Alkylphenolethoxylate, Fettalkoholethoxylate, aber auch Alkansulfonate, Olefinsulfonate oder Alkylphosphate.

Zu den nichtionischen Tensiden, den sogenannten Niotensiden, gehören z.B. Ethoxylate, wie zum Beispiel ethoxylierte Additionsprodukte von Alkoholen, wie beispielsweise Polyoxyalkylenpolyole, Amine, Fettsäuren, Fettsäureamide, Alkylphenole, Ethanolamide, Fettamine, Polysiloxane oder Fettsäureester, aber auch Alkyl- oder Alkylphenyl-polyglykolether, wie z.B. Fettalkoholpolyglykolether, oder Fettsäureamide, Alkylglykoside, Zuckerester, Sorbitanester, Polysorbate oder Trialkylaminoxide, aber auch Ester und Amide aus Poly(meth)-acrylsäuren mit Polyalkylenglykolen oder Aminopolyalkylenglykole, die allenfalls einseitig mit Alkylgruppen abgeschlossen sein können.

Beispiele für kationische Tenside sind quaternäre Ammonium- oder Phosphoniumverbindungen, wie zum Beispiel Tetraalkylammoniumsalze, N-,N-Dialkylimidazolinverbindungen, Dimethyldistearyl-ammoniumverbindungen, oder N-Alkylpyridinverbindungen, insbesondere Ammoniumchloride. Zu den amphoytischen oder amphoterischen Tensiden gehören amphotere Elektrolyte, sogeannte Ampholyte, wie zum Beispiel Aminocarbonsäuren, und Betaine.

Derartige Tenside sind kommerziell breit erhältlich. Besonders geeignet sind alkoxylierte Alkohole, alkoxylierte nichtionische Fluorotenside, insbesondere Zonyl^{®} FSO-100, welches von ABCR, Deutschland kommerziell erhältlich ist, alkoxylierte Alkohole oder alkoxylierte Alkylphenole, insbesondere Antarox FM 33, welches kommerziell bei Rhodia kommerziell erhältlich ist. Weiterhin sind alkoxylierte Fettalkohole, wie Hydropalat^{®} 120 von Cognis, bevorzugt. Besonders bevorzugt wird Hydropalat^{®} 3037 von Cognis als Tensid eingesetzt.

Ein weiterer bevorzugt eingesetzter optionaler Bestandteil ist ein wasserlösliches Haftvermittleradditiv, vorzugsweise ein wasserlösliches Amin-haltiges Haftvermittleradditiv. Durch den Einsatz von wasserlöslichen Haftvermittleradditiven wird die Haftperformance generell verbessert. Solche Haftvermittleradditive sind häufig Basen oder wässrige Silane, die ebenfalls basische Gruppen wie Amine enthalten können. Der pH-Wert der Zusammensetzung kann gegebenenfalls zum Ausgleich durch zusätzlicher Säure, z.B. Essigsäure, justiert werden. Wasserlösliche Haftvermittleradditive sind im Handel erhältlich.

Beispiele für geeignete wasserlösliche Haftvermittleradditive sind reaktive organofunktionelle Siloxan-Oligomere und Aminbasen. Beispiele sind Aminosiloxane und Tetramethylguanidin. Der Kondensationsgrad der Aminosiloxane kann unterschiedlich sein. Es kann sich um Dimere, Trimere oder Oligomere aus vier oder mehr monomeren Silanen oder Mischungen davon handeln. Derartige Aminosiloxane sind auch kommerziell erhältlich, z.B. als Dynasylan^{®} HDYROSIL 2627, Dynasylan^{®} HDYROSIL 2776 oder Dynasylan^{®} HDYROSIL 2929 von Degussa AG, Deutschland.

Als Cosolventien werden mit Wasser mischbare Lösungsmittel, wie Alkohole oder Ether oder Ketone, verstanden. Es ist jedoch bevorzugt, dass derartige Lösungsmittel lediglich in einer kleinen Menge, d.h. typischerweise weniger als 10 Gew.-% bezogen auf das Wasser, verwendet werden. Besonders bevorzugt ist die Zusammensetzung -abgesehen von Spuren von Alkoholen, welche sich aus der Hydrolyse der in der wässrigen Zusammensetzung eingesetzten Alkoxyilanen ergeben-frei von derartigen Cosolventien. Wird ein größerer Gehalt an Lösungsmittel eingesetzt, verstärkt sich die VOC-Problematik wiederum, deren Vermeidung ja mit ein Hauptgrund für den Einsatz von wässrigen Zusammensetzungen darstellt.

In einer bevorzugten Ausführungsform umfasst die ein- oder zweikomponentige wässrige Zusammensetzung mindestens eine Säure, bevorzugt eine organische Säure, wobei die Säure bei der zweikomponentigen Zusammensetzung in der wässrigen Komponente B enthalten ist. In einer weiteren bevorzugten Ausführungsform umfasst die ein- oder zweikomponentige wässrige Zusammensetzung mindestens ein Tensid, wobei bei der zweikomponentigen Zusammensetzung das Tensid in der Silankomponente A und/oder in der wässrigen Komponente B enthalten ist. Es ist bevorzugt, dass in der wässrigen Komponente B mindestens ein Tensid enthalten ist. In der Silankomponente A kann gegebenenfalls auch ein Tensid enthalten sein. In einer weiteren bevorzugten Ausführungsform umfasst die ein- oder zweikomponentige wässrige Zusammensetzung mindestens ein wasserlösliches Haftvermittleradditiv, vorzugsweise ein Amin-haltiges wasserlösliches Haftvermittleradditiv, wobei das wasserlösliche Haftvermittleradditiv bei der zweikomponentigen Zusammensetzung in der wässrigen Komponente B enthalten ist.

Eine besonders bevorzugte Ausführungsform ist eine einkomponentige wässrige Zusammensetzung bzw. Haftvermittlerzusammensetzung, die eine Säure, vorzugsweise eine organische Säure, mindestens ein Tensid und gegebenenfalls ein wasserlösliches Haftvermittleradditiv, vorzugsweise ein Amin-haltiges wasserlösliches Haftvermittleradditiv, umfasst.

Die bevorzugte einkomponentige wässrige Zusammensetzung kann zweckmäßigerweise durch Vermischen der Silankomponente A und der wässrigen Komponenten B der zweikomponentigen wässrigen Zusammensetzung wie vorstehend beschrieben erhalten werden.

Wenn der eingesetzte Emulgator aus Pyrrolidonen oder Propionamiden ausgewählt ist, liegt der Mengenanteil des Emulgators ausgewählt aus Pyrrolidonen oder Propionamiden, bezogen auf das Gesamtgewicht der ein- oder zweikomponentigen Zusammensetzung, im Bereich von 0,1 bis 10 Gew.-%, bevorzugt von 0,5 bis 2 Gew.-%.

In der wässrigen Zusammensetzung beträgt der Gewichtsanteil der Summe von Aminosilanen, Mercaptosilanen und Wasser und, falls vorhanden, Tetraalkoxysilanen der Formel (IV) bevorzugt mehr als 80 Gew.-%, insbesondere mehr als 90 Gew.-%, bezogen auf das Gesamtgewicht der ein- oder zweikomponentigen Zusammensetzung.

Der Gewichtsanteil der Summe von Aminosilanen, Mercaptosilanen und, falls vorhanden, Tetraalkoxysilanen der Formel (IV) beträgt z.B. mehr als 0,1 Gew.-%, insbesondere von 0,1 bis 10 Gew.-%, bevorzugt von 0,1 bis 5 Gew. -% und besonders bevorzugt von 0,5 bis 2 Gew.-%, bezogen auf das Gesamtgewicht der ein- oder zweikomponentigen Zusammensetzung.

Das Gewichtsverhältnis der Summe von Aminosilanen zu Mercaptosilanen in der Zusammensetzung beträgt bevorzugt 1:10 bis 10:1, insbesondere 1:1 bis 10:1, bevorzugt 5:2 bis 15:2.

Es versteht sich, dass die vorstehenden Gewichtsverhältnisse sich auf die Ausgangszusammensetzung beziehen, d.h. bevor es zu Hydrolyse- und/oder Kondensationsreaktionen kommt.

Die erfindungsgemäße Zusammensetzung wird bevorzugt durch ein Verfahren hergestellt, das umfasst den Schritt des Mischens von
a) mindestens einem Aminosilan, das mindestens eine an Si gebundene hydrolysierbare Gruppe aufweist,
b) mindestens einem Mercaptosilan, das mindestens eine an Si gebundene hydrolysierbare Gruppe aufweist, und
c) mindestens einer Verbindung ausgewählt aus Pyrrolidonen, Propionamiden und Aminoalkoholen als Emulgator oder Emulgatorvorstufe.

Wenn der Emulgator aus Pyrrolidonen und Propionamiden ausgewählt wird, wird durch die Mischung eine Zusammensetzung erhalten, die bereits als Silankomponente A geeignet ist. Die Mischung kann bei Raumtemperatur, z.B. 23°C, erfolgen. Gegebenfalls und bevorzugt kann zusätzlich mindestens ein Tensid zur Mischung gegeben werden. Gegebenfalls können auch weitere Silane oder übliche Bestandteile wie vorstehend beschrieben zugesetzt werden.

Wenn mindestens ein Aminoalkohol, bevorzugt Diethylenglycolamin, als Emulgatorvorstufe zugegeben wird, wird die erhaltene Mischung erwärmt, um den Aminoalkohol mit dem Aminosilan und/oder dem Mercaptosilan durch Umesterung oder Veresterung unter Bildung eines Aminoalkohol-Reaktionsprodukts umzusetzen, bei dem zumindest ein Teil der hydrolysierbaren Gruppen, die in dem mindestens einen Aminosilan und dem mindestens einen Mercaptosilan vorhanden sind, durch die Aminoalkoholat-Gruppe des Aminoalkohols ersetzt wird, und bei der Umsetzung gebildetes Nebenprodukt aus der Mischung entfernt wird.

Bei dem Nebenprodukt handelt es sich um die protonierte hydrolysierbare Gruppe, bevorzugt um einen Alkohol. Die Entfernung des Nebenprodukts kann auf übliche Art erfolgen, z.B. durch Abdestillieren. Die Destillation kann nach Bedarf auch im Vakuum erfolgen.

Vorzugsweise handelt es sich bei der Umsetzung um eine Umesterung, d.h. es werden an Si gebundene Alkoxygruppen durch Aminoalkoholatgruppen ausgetauscht. Besonders bevorzugt handelt es sich bei den Alkoxygruppen um Methoxygruppen, da das gebildete Methanol leicht abdestilliert werden kann.

Die Umsetzung erfolgt z.B. bei einer Temperatur von mehr als 30°C, bevorzugt mehr als 50°C, bevorzugter mehr als 70°C, z.B. etwa 90°C. Das gebildete Nebenprodukt, insbesondere Alkohol, werden bevorzugt durch Abdestillieren entfernt. Sobald die gesamte gebildete Menge an Nebenprodukt wie Alkohol entfernt wurde, wird das Reaktionsgemisch auf Raumtemperatur abgekühlt. Die Umsetzung erfolgt bevorzugt unter Stickstoffatmosphäre oder im Vakuum. Die nach der Abkühlung erhaltene Zusammensetzung enthält das Reaktionsprodukt und ist bereits als Silankomponente A geeignet ist. Gegebenfalls kann mindestens ein Tensid, weitere Silane oder übliche Bestandteile wie vorstehend beschrieben zugesetzt werden. Das ist in der Regel aber nicht bevorzugt. Allerdings kann in einer bevorzugten Ausführungsform zu der das Reaktionsprodukt enthaltenden Zusammensetzung ein weiterer Emulgator ausgewählt aus Pyrrolidonen und Propionamiden, bevorzugt Pyrrolidonen, insbesondere N-Cyclohexyl-2-pyrrolidon, zugesetzt werden.

Für die Umsetzung kann das Verhältnis an der Menge an eingesetztem Aminoalkohol zu der eingesetzten Gesamtmenge an Aminosilanen und Mercaptosilanen nach dem gewünschten Um- oder Veresterungsgrad variiert werden. Zur Herstellung des Reaktionsprodukts wird das Verhältnis der Gesamtmenge an eingesetztem Aminosilan und Mercaptosilan zur Menge an eingesetztem Aminoalkohol bevorzugt so gewählt, dass das molare Verhältnis von an Si gebundenen hydrolysierbaren Gruppen, die in dem mindestens einen Aminosilan und dem mindestens einen Mercaptosilan vorhanden sind, zu den Hydroxylgruppen, die im Aminoalkohol vorhanden sind, im Bereich von 1:1 bis 10:1, bevorzugt von 10:5 bis 10:2 liegt. In einer besonders bevorzugten Ausführungsform wir wird etwa jede dritte hydrolysierbare Gruppe der Silane, bevorzugt eine Alkoxygruppe, besonders bevorzugt eine Methoxygruppe durch den Aminoalkohol umgeestert.

Die bevorzugte einkomponentige wässrige Zusammensetzung wird bevorzugt folgendermaßen hergestellt. Zunächst wird Wasser vorgelegt, zu dem vorzugsweise zusätzliche Bestandteile, wie mindestens ein Tensid und mindestens eine Säure und gegebenenfalls ein wasserlösliches Haftvermittleradditiv unter Rühren zugesetzt werden. Die Zugabe erfolgt zweckmäßigerweise bei Raumtemperatur, gegebenenfalls kann der Rührvorgang auch bei erhöhter Temperatur erfolgen.

Die zusätzlichen Bestandteile werden vorzugweise nacheinander zugegeben und vor Zugabe des nächsten Bestandteils wird bevorzugt solange gerührt, bis sich der Bestandteil in Wasser aufgelöst bzw. homogen verteilt hat. Die Reihenfolge der Zugabe der möglichen zusätzlichen Bestandteile ist beliebig, bevorzugt wird aber, sofern eingesetzt, zunächst mindestens ein Tensid, dann mindestens eine Säure und schließlich mindestens ein wasserlösliches Haftvermittleradditiv zugegeben.

Zu der so erhaltenen wässrigen Komponente, die vorzugsweise mindestens ein Tensid, mindestens eine Säure und gegebenenfalls ein wasserlösliches Haftvermittleradditiv enthält, wird die Zusammensetzung enthaltend den Emulgator ausgewählt aus Pyrrolidonen und Propionamiden als Gemisch oder die Zusammensetzung enthaltend das Aminoalkohol-Reaktionsprodukt, die wie vorstehend beschrieben hergestellt worden sind, zugegeben und gerührt, um die einkomponentige wässrige Zusammensetzung zu erhalten. Der Rührvorgang erfolgt zweckmäßigerweise bei Raumtemperatur. Es wird zweckmäßigerweise eine gewisse Zeit gerührt, um eine homogene Mischung zu erhalten.

Die erfindungsgemäße Zusammensetzung enthaltend den Emulgator ausgewählt aus Pyrrolidonen und Propionamiden als Gemisch oder die Zusammensetzung enthaltend das Aminoalkohol-Reaktionsprodukt, ist als auch als Silankomponente A für eine zweikomponentige wässrige Haftvermittlerzusammensetzung geeignet, die als zweite gesonderte Komponente eine wässrige Komponente B umfasst. Die wässrige Komponente B enthält bevorzugt mindestens ein Tensid, mindestens eine Säure und gegebenenfalls ein wasserlösliches Haftvermittleradditiv. Die wässrige Komponente B kann hierfür auf die gleiche Weise hergestellt werden, wie die wässrige Komponente für die einkomponentige wässrige Zusammensetzung.

Die erfindungsgemäße ein- oder zweikomponentige wässrige Zusammensetzung eignet sich insbesondere als Haftvermittler oder Primer, vorzugsweise als Primer für Kleb- und Dichtstoffe. Durch die Verwendung eines derartigen Primers wird die Haftung verbessert.

Als Klebstoff kann grundsätzlich jeder Klebstoff verwendet werden. Vorteilhafte Haftverbesserungen zeigen sich insbesondere bei Polyurethan-Klebstoffen, insbesondere solche, die Isocyanatgruppen aufweisende Polyurethan-Präpolymere enthalten. Derartige Polyurethanklebstoffe sind kommerziell breit erhältlich, z.B. Sikaflex^{®} von Sika Schweiz AG. Die erfindungsgemäße wässrige Zusammensetzung ist besonders geeignet für 1 K-Polyurethan-Klebstoffe.

Zum Verkleben oder Abdichten von zwei oder mehr Substraten eignet sich somit ein Verfahren, bei dem die erfindungsgemäße wässrige Haftvermittlerzusammensetzung als Vorbehandlung auf mindestens ein Substrat aufgebracht und abgelüftet wird. Anschließend werden die Substrate mit einem Klebstoff oder Dichtstoff, vorzugsweise einem 1 K Polyurethan-Klebstoff, verklebt oder abgedichtet.

Die Substrate können vielfältiger Art sein. Bevorzugt ist mindestens eines der Substrate, das mit der erfindungsgemäßen wässrigen Haftvermittlerzusammensetzung vorbehandelt werden soll, Glas oder Glaskeramik oder Aluminium oder eine Aluminiumlegierung. Geignet sind auch Substrate aus Silber, insbesondere ein Silberaufdruck auf Glas oder Glaskeramik.

Besonders geeignet ist die erfindungsgemäße wässrige Zusammensetzung als Vorbehandlung zum Verkleben von Scheiben, insbesondere im Fahrzeugbau bzw. zum Direct Glazing. Daher ist in einer bevorzugten Ausführungsform ein Substrat Glas oder Glaskeramik und das zweite Substrat ein Lack oder ein lackiertes Metall oder eine lackierte Metalllegierung.

Der Einsatz von Mercaptosilanen in der wässrigen Zusammensetzung führt zu einer starken Haftverbesserung von 1 K Polyurethanklebstoffen auf Silber oder auf Silber basierenden Zusammensetzungen oder Legierungen. Es hat sich gezeigt, dass das beschriebene Verfahren insbesondere gut geeignet ist zum Verkleben von Scheiben mit integrierter Antenne oder anderen elektronischen Bauteilen. Derartige Antennenanschlusskontakte oder andere elektronische Bauteile sind typischerweise aus Silber oder auf Silber basierenden Zusammensetzungen oder Legierungen, auf der Scheibe vorhanden.

Auf diese Weise werden verklebte oder abgedichtete Artikel hergestellt. Derartige Artikel stellen vorzugsweise ein Transportmittel, insbesondere ein Automobil, Bus, Lastkraftwagen, Schienenfahrzeug, ein Schiff oder ein Luftfahrzeug dar.

### Beispiele

Die Erfindung wird durch nachstehende Beispiele weiter erläutert, die die Erfindung aber in keiner Weise einschränken sollen. Sofern nicht anders angegeben, beziehen sich alle Angaben auf das Gewicht.

**Verwendete Rohstoffe:**

| | |
|---|---|
| Silquest A1120 | N-(2-Aminoethyl)-3-aminopropyl-trimethoxysilan Silquest® A1120, GE Silicones, Schweiz |
| Silquest A1170 | Bis(trimethoxysilylpropyl)amin Silquest® A1170, GE Silicones, Schweiz |
| Silquest A189 | 3-Mercaptopropyl-trimethoxysilan Silquest® A189, GE Silicones, Schweiz |
| Hydropalat 3037 | Tensid, modifiziertes natürliches Öl, frei von Silicon, Hydropalat® 3037, Cognis, Deutschland |
| Hydrosil 2776 | Haftvermittleradditiv, reaktives organofunktionelles Siloxan-Oligomer, Dynasylan® Hydrosil 2776, Evonik Industries, Deutschland |
| CHP | N-Cyclohexyl-2-pyrrolidon |

### Beispiele 1 und 2

Auf Basis der in Tabelle 1 angegebenen Substanzen und Mengen wurden Silankomponenten 1 und 2 (S1 und S2) sowie eine wässrige Komponente 1 und 2 (W1 und W2) wie nachstehend angegeben hergestellt. Die Angaben in der Tabelle sind in Gew.-% bezogen auf die jeweilige Komponente. Anschließend wurden die Silankomponente 1 und die wässrige Komponente 1 und die Silankomponente 2 und die wässrige Komponente 2 wie nachstehend angegeben gemischt, um die einkomponentigen wässrigen Zusammensetzungen 1 und 2 (M1 und M2) zu erhalten. In der Tabelle 1 sind die Mengenanteile der einzelnen Bestandteile der Zusammensetzungen M1 und M2 in Gew.% bezogen auf die Gesamtmischung aufgeführt.

**Tabelle 1**

| | Beispiel 1 | | Beispiel 2 | |
|---|---|---|---|---|
| | W1 | M1 | W2 | M2 |
| entionisiertes Wasser | 94,7 | 92,33 | 93,97 | 91,62 |
| Hydropalat 3037 | 0,3 | 0,29 | 4,01 | 3,91 |
| Essigsäure | 4 | 3,90 | 0,96 | 0,94 |
| Hydrosil 2776 | 1 | 0,97 | 1,06 | 1,03 |
| Summe | 100 | | 100 | |

| | S1 | | S2 | |
|---|---|---|---|---|
| Silquest A 1120 | 20 | 0,50 | 20 | 0,50 |
| Silquest A 1170 | 30 | 0,75 | 30 | 0,75 |
| Silquest A 189 | 10 | 0,25 | 10 | 0,25 |
| CHP | 40 | 1,00 | - | - |
| Diethylenglykolamin | - | - | 40 | 1,00 |
| Summe | 100 | 100 | 100 | 100 |

### Beispiel 1

### Herstellung der Silankomponente 1 (S1)

Cyclohexylpyrrolidon (CHP) wurde mit den Aminosilanen (Silquest A 1120 und Silquest A 1170) und dem Mercaptosilan (Silquest A 189) gut vermischt. Die gesamte Mischprozedur wurde bei 23°C unter Stickstoff durchgeführt. Es wurde eine klare farblose Mischung erhalten.

### Herstellung wässrige Komponente 1 (W1) und einkomponentige Zusammensetzung 1 (M1)

Die gesamte Prozedur erfolgte bei 23°C unter langsamem Rühren. Wasser wird in einen Reaktor gegeben. Hydropalat 3037 wird zugegeben und es wird bis zur vollständigen Auflösung gerührt. Dann wird Essigsäure zugesetzt und 30 min gerührt. Hierzu wird Hydrosil 2776 gegeben und 15 min gerührt. Zu 97,5 Gewichtsteilen der so erhaltenen wässrigen Komponente 1 (W1) werden 2,5 Gewichtsteile der vorstehend hergestellten Silankomponente 1 (S1) gegeben und es wird 15 min gemischt, um die einkomponentige Zusammensetzung 1 (M1) zu erhalten.

### Beispiel 2

### Herstellung der Silankomponente 2 (S2)

Die Aminosilane (Silquest A 1120 und Silquest A 1170) und das Mercaptosilan (Silquest A 189) wurden in einen Reaktor gegeben. Es wurde gerührt und Diethylenglykolamin wurde langsam zugegeben. Sobald die gesamte Menge Diethylenglykolamin in der Mischung enthalten war, wurde der Reaktor auf 90°C erwärmt. Sich bildendes Methanol wurde aus der Mischung abdestilliert. Sobald das gebildete Methanol vollständig entfernt worden war (etwa 2 h), wurde die klare Lösung auf Raumtemperatur abgekühlt. Die gesamte Prozedur erfolgte unter Stickstoff.

### Herstellung wässrige Komponente 2 (W2) und einkomponentige Zusammensetzung 2 (M2)

Die gesamte Prozedur erfolgte bei 23°C unter langsamem Rühren. Wasser wird in einen Reaktor gegeben. Hydropalat 3037 wird zugegeben und es wird bis zur vollständigen Auflösung gerührt. Dann wird Essigsäure zugesetzt und 30 min gerührt. Hierzu wird Hydrosil 2776 gegeben und 15 min gerührt. Zu 97,5 Gewichtsteilen der so erhaltenen wässrigen Komponente 2 (W2) werden 2,5 Gewichtsteile der vorstehend hergestellten Silankomponente (S2) gegeben und es wird 15 min gemischt, um die einkomponentige wässrige Zusammensetzung 2 (M2) zu erhalten.

### Vergleichsbeispiel

Es wurde die Silankomponente des im Handel erhältlichen Standard-Haftvermittlers Sika HydroPrep^{®}-100 von Sika Schweiz AG als Silankomponente 3 verwendet, die auf den in den Beispielen 1 und 2 eingesetzen Aminosilanen und Mercaptosilanen basiert, aber keinen Emulgator gemäß den Beispielen 1 oder 2 enthält. Die wässrige Komponente 3 ist die wässrige Komponente dieses Standard-Haftvermittlers und ähnelt den wässrigen Komponenten der Beispiele 1 und 2. Durch Mischung der Silankomponente 3 und der wässrigen Komponente 3 wird eine wässrige Zusammensetzung 3 erhalten.

### Prüfung

Die gebildeten wässrigen Zusammensetzungen 1 bis 3 gemäß den Beispielen 1 und 2 und dem Vergleichsbeispiel wurden hinsichtlich ihrer Lagerstabilität auf verschiedenen Substraten als Haftvermittler in Kombination mit verschiedenen Klebstoffen geprüft. Hierfür wurden die wässrigen Zusammensetzungen nach Herstellung (frisch) und 3, 6 und 12 Monate nach Herstellung verwendet.

Als Klebstoffe wurden Sikaflex^{®}-250 DM-3 (DM3), Sikaflex®-250 DB-2 (DB2) und Sikaflex^{®}-265 DG-3 (DG3) verwendet, bei denen es sich um einkomponentige feuchtigkeitshärtende Polyurethanklebstoffe handelt, welche Polyurethanpräpolymere mit Isocyanatgruppen enthalten und bei Sika Schweiz AG kommerziell erhältlich sind.

Als Substrate wurden Float-Glas, Ferro Frit 14251, Ferro Frit 3402 und Ferro Frit 14279 verwendet. Die erwähnten Glassubstrate werden durch Rocholl AG vertrieben. Es sind Laborsubstrate, die den marktüblichen Glaskeramiken für VSG und ESG Gläser entsprechen. Ferro ist der Hersteller der Glaskeramikpaste, die Nummern sind die Typenbezeichnung der verwendeten Keramik.

Die wässrigen Zusammensetzungen wurden mittels eines damit getränktem Zellulosetuches (Tela®, Tela-Kimberly Switzerland GmbH) auf das jeweilige Substrat aufgetragen und 10 Minuten abgelüftet. Eine Dreiecksraupe von dem Klebstoff wurde bei 23°C und 50% rel. Luftfeuchtigkeit mittels Auspresskartusche und Düse aufgetragen.

Der Klebstoff wurde nach einer Aushärtezeit von 7 Tagen Klimaraumlagerung (23°C, 50% rel. Luftfeuchtigkeit) (RT), sowie nach einer anschliessenden Wasserlagerung (WL) in Wasser bei 23°C während 7 Tagen, sowie nach einer anschliessend Kataplasma-Lagerung (CP) von 7 Tagen bei 70°C, 100 % rel. Luftfeuchtigkeit, getestet.

Die Haftung des Klebstoffes wurde mittels 'Raupentest' getestet. Hierbei wird die Raupe am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebstoff (Kohäsionsbruch). Die Bewertung der Hafteigenschaften erfolgt durch visuelle Bestimmung des kohäsiven Anteils der Haftfläche.

Je höher der Anteil an kohäsivem Bruch ist, umso besser wird die Verklebung eingeschätzt. Testresultate mit Kohäsionsbrüchen von weniger als 70 % gelten typischerweise als ungenügend. Die Ergebnisse sind in Tabelle 2 zusammengefasst.

**Tabelle 2**

| **SikaFlex-250 DM-3** | | | | | | | | | | | | | |
|---|---|---|---|---|---|---|---|---|---|---|---|---|---|
| Vorbehandlung | Substrat | frisch | | | 3 Monate (RT) | | | 6 Monate (RT) | | | 12 Monate (RT) | | |
| | | RT | WL | CP | RT | WL | CP | RT | WL | CP | RT | WL | CP |
| Vergleichsbeispiel | Glas | 100 | 98 | 100 | 100 | 95 | 100 | 98 | **60** | 98 | 100 | 100 | 100 |
| | Ferro Frit 14251 | 100 | 100 | 90 | 100 | 100 | **30** | 85 | 85 | 80 | 100 | 100 | **20** |
| | Ferro Frit 3402 | 100 | 100 | 100 | 98 | **30** | 98 | 80 | **5** | 100 | 100 | **50** | 90 |
| | Ferro Frit 14279 | 100 | 95 | 100 | 100 | 100 | 100 | 100 | 100 | 100 | 100 | 85 | 100 |
| ungenügende Haftresultate (per 12) | | **0** | | | **2** | | | **2** | | | **2** | | |
| | | | | | | | | | | | | | |

| Vorbehandlung | Substrat | frisch | | | 3 Monate (RT) | | | 6 Monate (RT) | | | 12 Monate (RT) | | |
|---|---|---|---|---|---|---|---|---|---|---|---|---|---|
| | | RT | WL | CP | RT | WL | CP | RT | WL | CP | RT | WL | CP |
| Beispiel 1 | Glas | 100 | 100 | 100 | 100 | 100 | 98 | 100 | 95 | 100 | 100 | 75 | 100 |
| | Ferro Frit 14251 | 100 | 100 | **30** | 100 | 100 | 90 | 98 | 100 | 80 | 100 | 100 | 75 |
| | Ferro Frit 3402 | 100 | 100 | 100 | 100 | 100 | 100 | 100 | 100 | 100 | 100 | 100 | 100 |
| | Ferro Frit 14279 | 100 | 100 | 100 | 95 | 75 | 100 | 100 | 80 | 90 | 98 | **40** | 100 |
| ungenügende Haftresultate (per 12) | | **1** | | | **0** | | | **0** | | | **1** | | |
| | | | | | | | | | | | | | |

| Vorbehandlung | Substrat | frisch | | | 3 Monate (RT) | | | 6 Monate (RT) | | | 12 Monate (RT) | | |
|---|---|---|---|---|---|---|---|---|---|---|---|---|---|
| | | RT | WL | CP | RT | WL | CP | RT | WL | CP | RT | WL | CP |
| Beispiel 2 | Glas | 100 | 90 | 100 | 100 | 75 | 100 | 100 | 75 | 100 | 100 | **40** | 100 |
| | Ferro Frit 14251 | 100 | 100 | 100 | 100 | 100 | 100 | 100 | 100 | 100 | 100 | 100 | 100 |
| | Ferro Frit 3402 | 100 | 100 | 100 | 100 | 100 | 100 | 100 | 100 | 100 | 100 | 90 | 100 |
| | Ferro Frit 14279 | 100 | 100 | 100 | 100 | 100 | 100 | 95 | 75 | 100 | 100 | 100 | 100 |
| ungenügende Haftresultate (per 12) | | **0** | | | **0** | | | **0** | | | **1** | | |
| Vergleichsbeispiel | Glas | 100 | 100 | 100 | 100 | **60** | 100 | 98 | **20** | 100 | 100 | **50** | 100 |
| | Ferro Frit 14251 | 100 | 100 | 100 | 100 | 100 | 100 | 100 | 100 | 100 | 100 | 100 | 100 |
| | Ferro Frit 3402 | 100 | 98 | 95 | 98 | **20** | 90 | **10** | **5** | 100 | 100 | **0** | **20** |
| | Ferro Frit 14279 | 100 | 100 | 100 | 100 | 100 | 100 | 100 | **5** | 100 | 100 | 95 | 100 |
| ungenügende Haftresultate (per 12) | | **0** | | | **2** | | | **4** | | | **3** | | |
| | | | | | | | | | | | | | |

| Vorbehandlung | Substrat | frisch | | | 3 Monate (RT) | | | 6 Monate (RT) | | | 12 Monate (RT) | | |
|---|---|---|---|---|---|---|---|---|---|---|---|---|---|
| | | RT | WL | CP | RT | WL | CP | RT | WL | CP | RT | WL | CP |
| Beispiel 1 | Glas | 100 | 100 | 100 | 100 | **30** | 100 | 100 | 75 | 100 | 100 | **30** | 100 |
| | Ferro Frit 14251 | 100 | 100 | 100 | 100 | 100 | 100 | 100 | 100 | 100 | 100 | 100 | 100 |
| | Ferro Frit 3402 | 100 | 100 | 100 | 100 | 100 | 100 | 100 | 90 | 100 | 100 | 95 | 95 |
| | Ferro Frit 14279 | 100 | 100 | 100 | 100 | 95 | 100 | 100 | 98 | **40** | 100 | 75 | 100 |
| ungenügende Haftresultate (per 12) | | **0** | | | **1** | | | **1** | | | **1** | | |
| | | | | | | | | | | | | | |

| Vorbehandlung | Substrat | frisch | | | 3 Monate (RT) | | | 6 Monate (RT) | | | 12 Monate (RT) | | |
|---|---|---|---|---|---|---|---|---|---|---|---|---|---|
| | | RT | WL | CP | RT | WL | CP | RT | WL | CP | RT | WL | CP |
| Beispiel 2 | Glas | 100 | 100 | 100 | 100 | 75 | 100 | 100 | 75 | 100 | 100 | **30** | 100 |
| | Ferro Frit 14251 | 100 | 100 | 100 | 100 | 100 | 100 | 100 | 100 | 100 | 100 | 100 | 100 |
| | Ferro Frit 3402 | 100 | 100 | 100 | 98 | 75 | 98 | 100 | 90 | 100 | 98 | **30** | 80 |
| | Ferro Frit 14279 | 100 | 100 | 100 | 100 | 100 | 100 | 100 | **40** | 100 | 100 | 98 | 100 |
| ungenügende Haftresultate (per 12) | | **0** | | | **0** | | | **1** | | | **2** | | |

| Vorbehandlung | Substrat | frisch | | | 3 Monate (RT) | | | 6 Monate (RT) | | | 12 Monate (3 RT) | | |
|---|---|---|---|---|---|---|---|---|---|---|---|---|---|
| | | RT | WL | CP | RT | WL | CP | RT | WL | CP | RT | WL | CP |
| Vergleichsbeispiel | Glas | 100 | 100 | 100 | 100 | 85 | 100 | **60** | **60** | 100 | 100 | **60** | 100 |
| | Ferro Frit 14251 | 100 | 100 | 100 | 100 | 100 | 100 | 100 | 100 | 100 | 100 | **50** | 100 |
| | Ferro Frit 3402 | 100 | 100 | 100 | 95 | **30** | 100 | **60** | **5** | 100 | 100 | **30** | 100 |
| | Ferro Frit 14279 | 100 | 100 | 100 | 100 | 100 | 100 | 100 | **60** | 100 | 100 | 100 | 100 |
| ungenügende Haftresultate (per 12) | | **0** | | | **1** | | | **5** | | | **3** | | |
| | | | | | | | | | | | | | |

| Vorbehandlung | Substrat | frisch | | | 3 Monate (RT) | | | 6 Monate (RT) | | | 12 Monate (3 RT) | | |
|---|---|---|---|---|---|---|---|---|---|---|---|---|---|
| | | RT | WL | CP | RT | WL | CP | RT | WL | CP | RT | WL | CP |
| Beispiel 1 | Glas | 100 | 80 | 100 | 100 | **40** | 100 | 100 | 75 | 100 | 100 | **40** | 95 |
| | Ferro Frit 14251 | 100 | 100 | 100 | 100 | 100 | 100 | 100 | 100 | 100 | 100 | 100 | 100 |
| | Ferro Frit 3402 | 100 | 100 | 100 | 100 | 100 | 100 | 100 | 100 | 100 | 100 | 75 | 100 |
| | Ferro Frit 14279 | 100 | 100 | 100 | 100 | 100 | 100 | 100 | 100 | 100 | 100 | 100 | 100 |
| ungenügende Haftresultate (per 12) | | **0** | | | **1** | | | **0** | | | **1** | | |
| | | | | | | | | | | | | | |

| Vorbehandlung | Substrat | frisch | | | 3 Monate (RT) | | | 6 Monate (RT) | | | 12 Monate (RT) | | |
|---|---|---|---|---|---|---|---|---|---|---|---|---|---|
| | | RT | WL | CP | RT | WL | CP | RT | WL | CP | RT | WL | CP |
| Beispiel 2 | Glas | 100 | 95 | 100 | 100 | 80 | 100 | 95 | **30** | 100 | 100 | 75 | 100 |
| | Ferro Frit 14251 | 100 | 100 | 100 | 100 | 100 | 100 | 100 | 100 | 100 | 100 | 100 | 100 |
| | Ferro Frit 3402 | 100 | 75 | 100 | 100 | 75 | 100 | 100 | 98 | 100 | 90 | **10** | 100 |
| | Ferro Frit 14279 | 100 | 95 | 100 | 100 | 100 | 100 | 98 | 100 | 100 | 100 | 100 | 100 |
| ungenügende Haftresultate (per 12) | | **0** | | | **0** | | | **1** | | | **1** | | |

In den Tabellen 3 bis 5 sind die Anzahl unzureichender Haftresultate wie in Tabelle 2 aufgeführt für die verschiedenen Produktalter und Klebstoffe zusammengefasst.

**Tabelle 3**

| Sikaflex-250 DM-3 | | | |
|---|---|---|---|
| Produktalter(Monate) | Vergleichsbeispiel | Beispiel 1 | Beispiel 2 |
| 0,1 | 0 | 1 | 0 |
| 3 | 2 | 0 | 0 |
| 6 | 2 | 0 | 0 |
| 12 | 2 | 1 | 1 |

**Tabelle 4**

| Sikaflex-250 DB-2 | | | |
|---|---|---|---|
| Produktalter(Monate) | Vergleichsbeispiel | Beispiel 1 | Beispiel 2 |
| 0,1 | 0 | 0 | 0 |
| 3 | 2 | 1 | 0 |
| 6 | 4 | 1 | 1 |
| 12 | 3 | 1 | 2 |

**Tabelle 5**

| Sikaflex-265 DG-3 | | | |
|---|---|---|---|
| Produktalter(Monate) | Vergleichsbeispiel | Beispiel 1 | Beispiel 2 |
| 0,1 | 0 | 0 | 0 |
| 3 | 1 | 1 | 0 |
| 6 | 5 | 0 | 1 |
| 12 | 3 | 1 | 1 |

Aus den Ergebnissen ist deutlich ersichtlich, dass die erfindungsgemäßen wässrigen Haftvermittlerzusammensetzungen auch nach längerer Lagerung gute Ergebnisse erzielen, während der als Vergleich eingesetzte Standard-Haftvermittler eine deutliche Verminderung der Performance bei längerer Lagerung zeigt.

## Patentansprüche

1. Zusammensetzung, umfassend
A) mindestens ein Aminosilan, das mindestens eine an Si gebundene hydrolysierbare Gruppe aufweist,
B) mindestens ein Mercaptosilan, das mindestens eine an Si gebundene hydrolysierbare Gruppe aufweist, und
C) mindestens einen Emulgator ausgewählt aus Pyrrolidonen, Propionamiden und Aminoalkohol-Reaktionsprodukten,
wobei, wenn mindestens ein Aminoalkohol-Reaktionsprodukt als Emulgator eingesetzt wird, ein Aminoalkohol und zumindest ein Teil des Aminosilans und/oder Mercaptosilans in Form eines Aminoalkohol-Reaktionsprodukts enthalten sind, bei dem zumindest ein Teil der hydrolysierbaren Gruppen, die in dem mindestens einen Aminosilan und dem mindestens einen Mercaptosilan vorhanden sind, durch die Aminoalkoholat-Gruppe des Aminoalkohols ersetzt ist,
D) und/oder Hydrolyse- und/oder Kondensationsprodukte der enthaltenen Silane.

2. Zusammensetzung nach Anspruch 1, **dadurch gekennzeichnet, dass** der mindestens eine Emulgator ausgewählt ist aus
einem N-C₁₋₇-Alkyl-2-pyrrolidon, einem N-Cycloalkyl-2-pyrrolidon, einem Propionamid der Formel R⁶-C(O)NR⁷₂, worin R⁶ eine substituierte oder unsubstituierte Ethylgruppe ist und R⁷ unabhängig voneinander H oder eine C₁₋₄-Alkylgruppe ist, oder
einem Aminoalkohol-Reaktionsprodukt von einem Aminoalkohol ausgewählt aus Ethanolamin, Diethylenglykolamin, N-(β-Aminoethyl)-aminoethanol, Diethanolamin und N-Methyldiethanolamin.

3. Zusammensetzung nach Anspruch 1 oder Anspruch 2, **dadurch gekennzeichnet, dass** der mindestens eine Emulgator ausgewählt ist aus N-Methyl-2-pyrrolidon, N-Ethyl-2-pyrrolidon, N-Cyclohexyl-2-pyrrolidon und einem Aminoalkohol-Reaktionsprodukt von Diethylenglykolamin.

4. Zusammensetzung nach einem der Ansprüche 1 bis 3, **dadurch gekennzeichnet, dass** das Aminoalkohol-Reaktionsprodukt enthalten ist, wobei, bezogen auf die Gesamtmenge der in der Zusammensetzung enthaltenen Aminosilane und Mercaptosilane, das molare Verhältnis der an Si gebundenen hydrolysierbaren Gruppen und Aminoalkoholat-Gruppen, die in dem mindestens einen Aminosilan und dem mindestens einen Mercaptosilan vorhanden sind, zu den an Si gebundenen Aminoalkoholat-Gruppen im Bereich von 1:1 bis 10:1, bevorzugt 10:5 bis 10:2 liegt.

5. Zusammensetzung nach einem der Ansprüche 1 bis 4, **dadurch gekennzeichnet, dass**
das Aminosilan ein Aminosilan der Formel (I) ist, 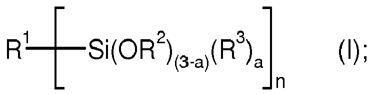 das Mercaptosilan ein Mercaptosilan der Formel (II) ist, 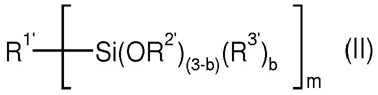 worin in den Formeln (I) und (II)
R¹ für einen n-wertigen organischen Rest mit mindestens einer primären und/oder sekundären Aminogruppe steht,
R^{1'} für einen m-wertigen organischen Rest mit mindestens einer Mercaptogruppe steht,
R² und R^{2'} unabhängig voneinander für eine Alkylgruppe mit 1 bis 4 C-Atomen oder für eine Acylgruppe stehen;
R³ und R^{3'} unabhängig voneinander für H oder für eine Alkylgruppe mit 1 bis 10 C-Atomen stehen;
a und b unabhängig voneinander für einen Wert von 0, 1 oder 2 stehen;
und n und m unabhängig voneinander für die Werte 1, 2, 3 und 4 stehen.

6. Zusammensetzung nach einem der Ansprüche 1 bis 5, **dadurch gekennzeichnet, dass** die Zusammensetzung eine einkomponentige wässrige Zusammensetzung ist, die Wasser umfasst, oder eine zweikomponentige wässrige Zusammensetzung aus einer Silankomponente A, die eine Zusammensetzung nach einem der Ansprüche 1 bis 5 ist, und einer wässrigen Komponente B, die Wasser enthält, ist, wobei die Zusammensetzung bevorzugt eine einkomponentige wässrige Zusammensetzung ist.

7. Zusammensetzung nach Anspruch 6, **dadurch gekennzeichnet, dass** die Zusammensetzung mindestens eine Säure, bevorzugt eine organische Säure, umfasst, wobei die Säure bei der zweikomponentigen Zusammensetzung in der wässrigen Komponente B enthalten ist, und/oder die Zusammensetzung mindestens ein Tensid umfasst, wobei bei der zweikomponentigen Zusammensetzung das Tensid in der Silankomponente A und/oder in der wässrigen Komponente B enthalten ist, wobei bevorzugt in der wässrigen Komponente B mindestens ein Tensid enthalten ist.

8. Zusammensetzung nach Anspruch 6 oder Anspruch 7, **dadurch gekennzeichnet, dass** die Zusammensetzung mindestens ein wasserlösliches Haftvermittleradditiv, vorzugsweise ein Amin-haltiges wasserlösliches Haftvermittleradditiv, umfasst, wobei das wasserlösliche Haftvermittleradditiv bei der zweikomponentigen Zusammensetzung in der wässrigen Komponente B enthalten ist.

9. Zusammensetzung nach einem der Ansprüche 6 bis 8, **dadurch gekennzeichnet, dass** die einkomponentige wässrige Zusammensetzung eine Säure, vorzugsweise eine organische Säure, mindestens ein Tensid und gegebenenfalls ein wasserlösliches Haftvermittleradditiv, vorzugsweise ein Amin-haltiges wasserlösliches Haftvermittleradditiv, umfasst.

10. Zusammensetzung nach einem der Ansprüche 1 bis 9, **dadurch gekennzeichnet, dass** der Emulgator aus Pyrrolidonen und/oder Propionamiden ausgewählt ist, wobei der Mengenanteil des Emulgators ausgewählt aus Pyrrolidonen und/oder Propionamiden, bezogen auf das Gesamtgewicht der ein- oder zweikomponentigen Zusammensetzung, im Bereich von 0,1 bis 10 Gew.-% liegt.

11. Verfahren zur Herstellung einer Zusammensetzung, umfassend den Schritt des Mischens von
a) mindestens einem Aminosilan, das mindestens eine an Si gebundene hydrolysierbare Gruppe aufweist,
b) mindestens einem Mercaptosilan, das mindestens eine an Si gebundene hydrolysierbare Gruppe aufweist, und
c) mindestens einer Verbindung ausgewählt aus Pyrrolidonen, Propionamiden und Aminoalkoholen als Emulgator oder Emulgatorvorstufe,
wobei, wenn mindestens ein Aminoalkohol als Emulgatorvorstufe zugegeben wird, die erhaltene Mischung erwärmt wird, um den Aminoalkohol mit dem Aminosilan und dem Mercaptosilan unter Bildung eines Aminoalkohol-Reaktionsprodukts umzusetzen, bei dem zumindest ein Teil der hydrolysierbaren Gruppen, die in dem mindestens einen Aminosilan und dem mindestens einen Mercaptosilan vorhanden sind, durch die Aminoalkoholat-Gruppe des Aminoalkohols ersetzt wird, und bei der Umsetzung gebildetes Nebenprodukt aus der Mischung entfernt wird.

12. Verfahren nach Anspruch 11, wobei zur Herstellung des Aminoalkohol-Reaktionsprodukts die Gesamtmenge an eingesetztem Aminosilan und Mercaptosilan zur Menge an eingesetztem Aminoalkohol so ist, dass das molare Verhältnis von an Si gebundenen hydrolysierbaren Gruppen, die in dem mindestens einen Aminosilan und dem mindestens einen Mercaptosilan vorhanden sind, zu den Hydroxylgruppen, die im Aminoalkohol vorhanden sind, im Bereich von 1:1 bis 10:1, bevorzugt von 10:5 bis 10:2, liegt.

13. Verfahren nach Anspruch 11 oder Anspruch 12, ferner umfassend die Zugabe der erhaltenen Mischung zu einer wässrigen Komponente, die neben Wasser vorzugsweise mindestens ein Tensid, mindestens eine Säure und gegebenenfalls ein wasserlösliches Haftvermittleradditiv enthält, um eine einkomponentige wässrige Zusammensetzung zu erhalten.

14. Verwendung einer wässrigen Zusammensetzung nach einem der Ansprüche 6 bis 10 als Haftvermittler oder Primer, wobei das zu behandelnde Substrat vorzugsweise ein Glas- oder Glaskeramiksubstrat ist, insbesondere als Vorbehandlung für die Verklebung mit einem Klebstoff, bevorzugt mit einem 1 K Polyurethan-Klebstoff.

15. Verwendung nach Anspruch 14 für das Direct Glazing, insbesondere im Automobilbau.
